(19) **Europäisches Patentamt European Patent Office Office européen des brevets**

(11) **EP 4 651 543 A1**

(12) **EUROPEAN PATENT APPLICATION**
published in accordance with Art. 153(4) EPC

(43) Date of publication:
**19.11.2025 Bulletin 2025/47**

(21) Application number: **24741222.4**

(22) Date of filing: **09.01.2024**

(51) International Patent Classification (IPC):
*H04W 24/02* (2009.01)

(52) Cooperative Patent Classification (CPC):
**H04L 5/00; H04W 24/02; H04W 24/08;**
**H04W 52/02;** Y02D 30/70

(86) International application number:
**PCT/CN2024/071273**

(87) International publication number:
**WO 2024/149223 (18.07.2024 Gazette 2024/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.01.2023  CN 202310200999**

(71) Applicant: **Apogee Networks, LLC**
**Dallas, TX 75201 (US)**

(72) Inventors:
• **JIANG, Qi**
  **Shanghai 201206 (CN)**
• **LIU, Zheng**
  **Shanghai 201206 (CN)**
• **ZHANG, Xiaobo**
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57)     Disclosed in the present application are a method and apparatus used in a node for wireless communication. The method comprises: a node first receiving a first information block, the first information block being used for determining a candidate opportunity set, and the candidate opportunity set comprising opportunities within a first time window; then, measuring wake-up signals in a target wake-up signal set; the target wake-up signal set being associated with at least one opportunity, a target opportunity subset comprising an opportunity associated with a wake-up signal in the target wake-up signal set, and the target opportunity subset belonging to the candidate opportunity set; the first opportunity being one of the opportunities in the target opportunity subsets, and the first wake-up signal belonging to the target wake-up signal set and being associated with the first opportunity; and at least one of an identifier of a second node or a time domain position of the first time window being used for determining the target opportunity subset from the candidate opportunity sets. The present application improves measurement in energy saving scenarios, thereby improving overall system performance.

100 ⟶  [ First node ]

Step 101: Receive a first information block, the first information block being used to determine a set of candidate occasions, and the set of candidate occasions including a plurality of occasions in a first time window

Step 102: Perform measurement on a wake-up signal in a target wake-up signal set, the target wake-up signal set including at least one wake-up signal

[ End ]

Fig. 1

## Description

## Technical Field

The present application relates to a transmission method and apparatus in a wireless communication system, and in particular, to a measurement scheme and apparatus in wireless communication.

## Background Art

As application scenarios of a next-generation wireless communication system become increasingly diversified, different application scenarios have different performance requirements for the system. To meet the different performance requirements of various application scenarios, in the 3GPP (3rd Generation Partner Project, 3rd Generation Partner Project) RAN (Radio Access Network, radio access network) #72 plenary meeting, it is decided to study the new radio (NR, New Radio) technology (or 5G). In addition, the WI (Work Item, work item) of the new radio (NR, New Radio) technology is approved at the 3GPP RAN #75 plenary meeting, and standardization work on NR is started.

In the new radio technology, energy consumption is an important indicator to measure performance of the technology. To adapt to various application scenarios and meet different requirements, 3GPP has been evolving technologies for reducing energy consumption.

## Summary of the Invention

Among various technologies for reducing energy consumption, it is considered an effective method to wake up a recipient of a user equipment (UE, User Equipment) or network equipment (gNB/eNB) in advance through a wake-up signal. However, in a current NR system, there is a strict definition for layer-3 measurement of the UE. Based on a configuration of a DRX (Discontinuous Reception, discontinuous reception) cycle (Cycle) of the UE, the UE needs to perform, in a specific frequency, intra-frequency or inter-frequency measurement in time domain for cell selection and cell reselection even in an RRC_IDLE or RRC_INACTIVE state. The continuous wake-up and operations of turning on a terminal baseband function brought about by the above measurement inevitably affect the energy saving effect. Therefore, a method to reduce measurement complexity and power consumption is to perform layer-3 measurement through a wake-up signal. However, when the wake-up signal is used for layer-3 measurement, how to improve measurement accuracy is a problem to be solved.

In view of this, the present application discloses a solution. It should be noted that in the description of the present application, only reducing energy consumption is used as a typical application scenario or example. The wake-up signal in the present application is also applicable to another scenario facing a similar problem (for example, another scenario that requires pre-wake-up, including but not limited to a capacity enhancement system, a short-range communication system, unlicensed frequency domain communication, IoT (Internet of Things, Internet of Things), an URLLC (Ultra Reliable Low Latency Communication, ultra reliable low latency communication) network, and Internet of Vehicles), and similar technical effects can be achieved. In addition, the use of a unified solution for different scenarios (including but not limited to scenarios for reducing energy consumption) may further help reduce hardware complexity and costs. In the absence of conflict, embodiments in the first node and features in the embodiments in the present application may be applied to the second node, and vice versa.

In particular, the interpretation of the terms (Terminology), nouns, functions, and variables in the present application (if not specifically stated) can refer to the definitions in the 3GPP specification protocols TS36 series, TS38 series, and TS37 series. If necessary, reference may be made to 3GPP standards TS38.211, TS38.212, TS38.213, TS38.214, TS38.215, TS38.321, TS38.331, TS38.305, TS38.304, and TS37.355, to assist in understanding the present application.

The present application discloses a method used in a first node for wireless communication, including:

receiving a first information block, the first information block being used for determining a candidate occasion set, and the candidate occasion set including a plurality of occasions in a first time window; and performing measurement for a wake-up signal in a target wake-up signal set, the target wake-up signal set including at least one wake-up signal,

where any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; the first occasion is one occasion included in the target occasion subset, the first wake-up signal is a wake-up signal included in the target wake-up signal set and associated with the first occasion, and the first wake-up signal is used for determining whether to monitor a PDCCH (Physical Downlink Control Channel, physical downlink control channel) in the first occasion; and at least one of an identifier of a sender of the first information block or a time domain position of the first time window is used for determining the target occasion subset from the candidate occasion set.

As one embodiment, the method is characterized in that by establishing a relation between at least one of the identifier of the sender of the first information block or the time domain position of the first time window and determining of the target occasion subset, an anti-interference capability of the wake-up signal in the target wake-up signal set is improved, and measurement accuracy of the measurement performed for the wake-up signal in the target wake-up signal set is improved.

As one embodiment, the method is characterized in that interference between the wake-up signal in the target wake-up signal set and a wake-up signal sent by another neighboring cell is reduced.

According to an aspect of the present application, the sender of the first information block includes a second node, the second node is associated with a tracking area code (Tracking Area Code), and the tracking area code is used for determining the target occasion subset from the candidate occasion set.

As one embodiment, the method is characterized in that the tracking area code is used for determining the target occasion subset, thereby further improving an anti-interference capability of the wake-up signal in the target wake-up signal set.

According to an aspect of the present application, an identity of the first node is used for determining the first occasion, and the first wake-up signal is used by the first node to determine whether to monitor the PDCCH in the first occasion; and the target wake-up signal set includes a second wake-up signal, the second wake-up signal is associated with a second occasion, and the first occasion is different from the second occasion.

As one embodiment, the method is characterized in that the first wake-up signal and the second wake-up signal are both used for measurement to improve measurement accuracy.

According to one aspect of the present application, the following is included:

receiving a second information block,
where the second information block is used for determining a first time length, and a configuration parameter set for the target wake-up signal set remains unchanged in the first time length.

As one embodiment, the method is characterized in that the first time length is configured to ensure restability of the wake-up signal in the target wake-up signal set, thereby improving measurement accuracy.

According to an aspect of the present application, the second node sends a third information block, the third information block is used for determining the configuration parameter set for the target wake-up signal set, the third information block is transmitted via an Xn or S1 interface, a recipient of the third information block includes a third node, and the third node and the first node are not co-located.

As one embodiment, the method is characterized in that the second node exchanges a configuration parameter of the target wake-up signal set to the third node, thereby ensuring that the target wake-up signal set is not interfered by a wake-up signal sent by an adjacent cell.

According to an aspect of the present application, the identity of the first node is used for determining an identifier corresponding to a first device group, and the identifier corresponding to the first device group is used for determining the first wake-up signal; an identifier corresponding to a second device group is used for determining the second wake-up signal; the first device group includes at least one terminal, and the first device group includes the first node; and the second device group includes at least one terminal, and the second device group does not include the first node.

As one embodiment, the method is characterized in that wake-up signals for different device groups are used for measurement to improve measurement accuracy.

According to one aspect of the present application, the following is included:

sending target information,
where the target information is used for determining whether the first node supports the measurement performed for the wake-up signal in the target wake-up signal set.

As one embodiment, the method is characterized in that the first node informs a base station or a core network of a capability of the first node through the target information, thereby facilitating configuration of the wake-up signal in the target wake-up signal set.

According to an aspect of the present application, the first information block is used for determining a second time length, and a length of a time interval between the first occasion and the second occasion is related to the second time length.

As one embodiment, the method is characterized in that a reasonable second time length is configured, thereby ensuring that a time interval between the first wake-up signal associated with the first occasion and the second wake-up signal associated with the second occasion meets performance requirements, to ensure measurement performance.

The present application discloses a method used in a second node for wireless communication, including:

sending a first information block, the first information block being used for determining a candidate occasion set, and the candidate occasion set including a plurality of occasions in a first time window; and
sending at least one wake-up signal included in a target wake-up signal set, a recipient of the first information block performing measurement for the at least one wake-up signal in the target wake-up signal set,
where any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of the second node or a time domain position of the first time window is used for determining the target occasion subset from the candidate occasion set.

According to an aspect of the present application, the second node is associated with a tracking area code, and the tracking area code is used for determining the target occasion subset from the candidate occasion set.

According to an aspect of the present application, the recipient of the first information block includes a first node, an identity of the first node is used for determining the first occasion, and the first wake-up signal is used by the first node to determine whether to monitor the PDCCH in the first occasion; and the target wake-up signal set includes a second wake-up signal, the second wake-up signal is associated with a second occasion, and the first occasion is different from the second occasion.

According to one aspect of the present application, the following is included:

sending a second information block, where the second information block is used for determining a first time length, and a configuration parameter set for the target wake-up signal set remains unchanged in the first time length.

According to one aspect of the present application, the following is included:

sending a third information block, where the third information block is used for determining the configuration parameter set of the target wake-up signal set, where the third information block is transmitted via an Xn or S1 interface, a recipient of the third information block includes a third node, and the third node and the first node are not co-located.

According to an aspect of the present application, the recipient of the first information block includes a first node, an identity of the first node is used for determining an identifier corresponding to a first device group, and the identifier corresponding to the first device group is used for determining the first wake-up signal; an identifier corresponding to a second device group is used for determining the second wake-up signal; the first device group includes at least one terminal, and the first device group includes the first node; and the second device group includes at least one terminal, and the second device group does not include the first node.

According to one aspect of the present application, the following is included:

receiving target information, where the target information is used for determining whether the first node supports the measurement performed for the wake-up signal in the target wake-up signal set.

According to an aspect of the present application, the first information block is used for determining a second time length, and a length of a time interval between the first occasion and the second occasion is related to the second time length.

The present application discloses a first node for wireless communication, including:

a first transceiver for receiving a first information block, the first information block being used for determining a candidate occasion set, and the candidate occasion set including occasions within a first time window; and

a first receiver for performing measurement on a wake-up signal in a target wake-up signal set, the target wake-up signal set includes at least one wake-up signal,

where any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of a sender of the first information block or a time domain position of the first time window is used for determining the target occasion subset from the candidate occasion set.

The present application discloses a second node for wireless communication, including:

a second transceiver for sending a sending a first information block, the first information block being used for determining a candidate occasion set, and the candidate occasion set including a plurality of occasions in a first time window; and

a first transmitter, sending at least one wake-up signal included in a target wake-up signal set, a recipient of the first information block performing measurement on the at least one wake-up signal in the target wake-up signal set,

where any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of the second node or a time domain position of the first time window is used for determining the target occasion subset from the candidate occasion set.

As one embodiment, benefits of the solution in the present application are to optimize configuration of a time domain resource occupied by the wake-up signal used for measurement in a network energy saving scenario, thereby reducing interference and improving measurement performance.

## Brief Description of the Drawings

Other features, purposes, and advantages of the present application will become more apparent by reading the detailed description of the non-limiting embodiments with reference to the following drawings:

FIG. 1 is a processing flowchart of a first node according to an embodiment of the present application;

FIG. 2 is a schematic diagram of a network architecture according to an embodiment of the present application;

FIG. 3 is a schematic diagram of an embodiment of a wireless protocol architecture of a user plane and a control plane according to an embodiment of the present application;

FIG. 4 is a schematic diagram of a first communication device and a second communication device according to an embodiment of the present application;

FIG. 5 is a flowchart of a first information block according to an embodiment of the present application;

FIG. 6 is a flowchart of a second information block according to an embodiment of the present application;

FIG. 7 is a flowchart of target information according to an embodiment of the present application;

FIG. 8 is a flowchart of a third information block according to anembodiment of the present application;

FIG. 9 is a schematic diagram of a target occasion subset according to an embodiment of the present application;

FIG. 10 is a schematic diagram of a target wake-up signal set and a target occasion subset according to an embodiment of the present application;

FIG. 11 is a schematic diagram of a target wake-up signal set according to an embodiment of the present application;

FIG. 12 is a schematic diagram of a target wake-up signal set according to another embodiment of the present application;

FIG. 13 is a block diagram of a structure of a processing device in a first node device according to an embodiment of the present application; and

FIG. 14 is a block diagram of a structure of a processing device in a second node device according to an embodiment of the present application.

## Detailed Description of Embodiments

The technical solution of the present application is further described in detail below in conjunction with the accompanying drawings. It should be noted that, in the absence of conflict, embodiments of the present application and the features in embodiments may be arbitrarily combined with each other.

## Embodiment 1

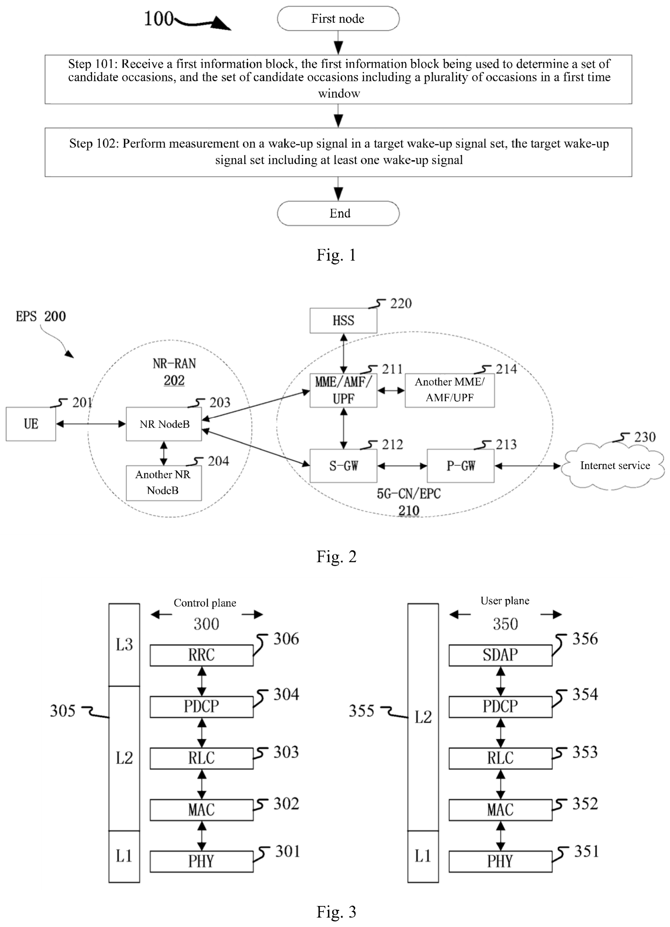

Embodiment 1 illustrates a processing flowchart of a first node, as shown in FIG. 1. In 100 shown in FIG. 1, each box represents a step. In Embodiment 1, the first node in the present application receives a first information block in step 101, where the first information block is used for determining a candidate occasion set, and the candidate occasion set includes a plurality of occasions in a first time window.In step 102,measurement is performed for a wake-up signal in a target wake-up signal set, and the target wake-up signal set includes at least one wake-up signal.

In Embodiment 1,any one of the wake-up signals in the target wake-up signal set is associated with at least one occasion, the target occasion subset includes the occasion associated with the wake-up signal in the target wake-up signal set, and any one of the occasions included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of a sender of the first information block or a time domain position of the first time window is used for determining the target occasion subset from the candidate occasion set.

As one embodiment, step 102 includes receiving at least one wake-up signal in the target wake-up signal set.

As one embodiment, step 102 includes receiving a plurality of wake-up signals in the target wake-up signal set.

As one embodiment, the first information block is transmitted through RRC (Radio Resource Control, radio resource control) signaling.

As one embodiment, the first information block includes a part or all of CellGroupConfig IE (Information Elements, information elements).

As one embodiment, the first information block includes a part or all of fields in CellGroupConfig IE.

As one embodiment, the first information block includes a part or all of SCellConfig IE.

As one embodiment, the first information block includes a part or all of fields in SCellConfig IE.

As one embodiment, the first information block includes a part or all of DRX-Config IE.

As one embodiment, the first information block includes a part or all of fields in DRX-Config IE.

As one embodiment, the first information block includes a part or all of DRX-ConfigSecondaryGroup IE.

As one embodiment, the first information block includes a part or all of fields in DRX-ConfigSecondaryGroup IE.

As one embodiment, the first information block includes a part or all of MAC-CellGroupConfig IE.

As one embodiment, the first information block includes a part or all of fields in MAC-CellGroupConfig IE.

As one embodiment, the first information block includes a part or all of an RRCReconfiguration message.

As one embodiment, the first information block includes a part or all of fields in an RRCReconfiguration message.

As one embodiment, the first information block includes a part or all of a CarrierInfoNR field.

As one embodiment, the first information block includes a part or all of SSB-MTC IE.

As one embodiment, the first information block includes a part or all of fields in SSB-MTC IE.

As one embodiment, the first information block includes a part or all of a Paging message (Message).

As one embodiment, the first information block includes a part or all of fields in SIB1.

As one embodiment, the first information block includes a part or all of fields in ServingCellConfigCommonSIE.

As one embodiment, the first information block includes a part or all of fields in DownlinkConfigCommonSIB.

As one embodiment, the first information block includes a part or all of fields in PCCH-Config.

As one embodiment, the first information block includes a part or all of fields in PagingCycle.

As one embodiment, the first information block includes a part or all of fields in ExtendedPagingCycle.

As one embodiment, a name of RRC signaling carrying the first information block includes DRX.

As one embodiment, a name of RRC signaling carrying the first information block includes Config.

As one embodiment, a name of RRC signaling carrying the first information block includes SSB.

As one embodiment, a name of RRC signaling carrying the first information block includes MTC.

As one embodiment, a name of RRC signaling carrying the first information block includes WUS.

As one embodiment, a name of RRC signaling carrying the first information block includes LP.

As one embodiment, the candidate occasion set includes one or more occasions (Occasion).

As one sub-embodiment of this embodiment, the occasion includes a PO (Paging Occasion, paging occasion).

As one sub-embodiment of this embodiment, the occasion includes a slot (Slot).

As one sub-embodiment of this embodiment, the occasion includes a subframe (Subframe).

As one embodiment, the first time window includes a quantity of a continuous positive integer greater than 1 of slots.

As one embodiment, the first time window includes a quantity of a continuous positive integer greater than 1 of subframes.

As one embodiment, the first time window includes a quantity of a continuous positive integer greater than 1 of radio frames.

As one embodiment, the first time window includes one or more DRX cycles.

As one embodiment, the first time window corresponds to one radio frame.

As one embodiment, the first time window corresponds to one system frame.

As one embodiment, the candidate occasion set includes all POs configured by the second node.

As one embodiment, the candidate occasion set includes a PO of the first node.

As one embodiment, the candidate occasion set includes a PO corresponding to a node other than the first node.

As one embodiment, a position of a time domain resource occupied by the first wake-up signal is related to a position of a time domain resource occupied by the first occasion.

As one sub-embodiment of this embodiment, the position of the time domain resource occupied by the first wake-up signal is used for determining the position of the time domain resource occupied by the first occasion.

As one sub-embodiment of this embodiment, the position of the time domain resource occupied by the first occasion is used for determining the position of the time domain resource occupied by the first wake-up signal.

As one sub-embodiment of this embodiment, a time interval between the position of the time domain resource occupied by the first wake-up signal and the time domain resource occupied by the first occasion is fixed, or is configured through RRC signaling.

As one embodiment, the target wake-up signal set includes K1 wake-up signals, K1 is a positive integer greater than 1, and the K1 wake-up signals include the first wake-up signal and the second wake-up signal, the first wake-up signal is related to the first node, and the second wake-up signal is related to a terminal other than the first node.

As one sub-embodiment of this embodiment, the first wake-up signal is related to the first occasion, and the first occasion is a PO corresponding to the first node.

As one sub-embodiment of this embodiment, the second wake-up signal is related to the terminal other than the first node, and the second occasion is a PO corresponding to the terminal other than the first node.

As one embodiment, the measurement performed for the wake-up signal in the target wake-up signal set includes layer-3 measurement.

As one embodiment, the measurement performed for the wake-up signal in the target wake-up signal set includes measurement of intra-frequency NR cells.

As one embodiment, the measurement performed for the wake-up signal in the target wake-up signal set includes measurement of inter-frequency NR cells.

As one embodiment, the measurement performed for the wake-up signal in the target wake-up signal set includes evaluation (Evaluation) and measurement of a serving cell.

As one embodiment, the measurement performed for the wake-up signal in the target wake-up signal set includes intra-cell measurement.

As one embodiment, the measurement performed for the wake-up signal in the target wake-up signal set includes inter-cell measurement.

As one embodiment, a result of the measurement performed for the wake-up signal in the target wake-up signal set includes an RSSI (Received Signal Strength Indicator, received signal strength indicator).

As one embodiment, a result of the measurement performed for the wake-up signal in the target wake-up signal set includes energy.

As one embodiment, a result of the measurement performed for the wake-up signal in the target wake-up signal set includes RSRP (Reference Signal Receiving Power, reference signal receiving power).

As one embodiment, a result of the measurement performed for the wake-up signal in the target wake-up signal set includes dBm (millidecibel).

As one embodiment, the result of the measurement performed for the wake-up signal in the target wake-up signal set is filtered to generate a result of layer-3 measurement.

As one embodiment, any one of the wake-up signals in the target wake-up signal set includes a LP (Low Power, low power) WUS (Wake-Up Signal, wake-up signal).

As one embodiment, at least one of the wake-up signals in the target wake-up signal set includes a LP WUS.

As one embodiment, any one of the wake-up signals in the target wake-up signal set includes a WUS.

As one embodiment, at least one of the wake-up signals in the target wake-up signal set includes a WUS.

As one embodiment, meaning of the above-mentioned feature "any one of the wake-up signals in the target wake-up signal set is associated with at least one occasion" includes: A time domain resource occupied by any one of the wake-up signals in the target wake-up signal set includes one occasion.

As one embodiment, meaning of the above-mentioned feature "any one of the wake-up signals in the target wake-up signal set is associated with at least one occasion" includes: Any one of the wake-up signals in the target wake-up signal set occupies an occasion, and the occupied occasion belongs to the PO of the first node, or the occupied occasion belongs to the PO of the terminal other than the first node.

As one embodiment, meaning of the above-mentioned feature "any one of the wake-up signals in the target wake-up signal set is associated with at least one occasion" includes: Any one of the wake-up signals in the target wake-up signal set occupies a slot, and the time interval between a slot occupied by the wake-up signal and the wake-up signal is fixed, or is configured through RRC signaling.

As one embodiment, meaning of the above-mentioned feature "any one of the wake-up signals in the target wake-up signal set is associated with at least one occasion" includes: Any one of the wake-up signals in the target wake-up signal set occupies a time domain resource, and the associated one occasion is used for determining the time domain resource occupied by the corresponding wake-up signal.

As one embodiment, the target occasion subset includes M1 occasions, and M1 is a positive integer greater than 1.

As one sub-embodiment of this embodiment, the M1 occasions correspond to M1 POs respectively.

As one sub-embodiment of this embodiment, the M1 occasions correspond to M1 slots respectively.

As one sub-embodiment of this embodiment, the M1 occasions correspond to M1 subframes respectively.

As one sub-embodiment of this embodiment, the M1 occasions include at least the first occasion and the second occasion, the first occasion is the PO for the first node, and the second occasion is the corresponding to the terminal other than the first node.

As a dependent embodiment of this sub-embodiment, the second occasion corresponds to the second wake-up signal, and the second wake-up signal is used to wake up the node other than the first node.

As a dependent embodiment of this sub-embodiment, the second occasion corresponds to the second wake-up signal, and the second wake-up signal is used for determining whether to monitor a PDCCH in the second occasion.

As one embodiment, meaning of the above-mentioned technical feature "determining the target occasion subset from the candidate occasion set" includes: determining a time domain position of the occasion included in the target occasion subset from the candidate occasion set.

As one embodiment, meaning of the above-mentioned technical feature "determining the target occasion subset from the candidate occasion set" includes: determining a time domain position of the occasion included in the target occasion subset from the occasion included in the candidate occasion set.

As one embodiment, meaning of the above-mentioned technical feature "determining the target occasion subset from the candidate occasion set" includes: The candidate occasion set includes N1 occasions, the target occasion subset includes M1 occasions, and M1 occasions are determined from the N1 occasions, where N1 is a positive integer greater than 1, and M1 is a positive integer not greater than N1 and greater than 1.

As one embodiment, an identifier of a sender of the first wake-up signal is used for determining the target occasion subset from the candidate occasion set.

As one sub-embodiment of this embodiment, the identifier of the sender includes a PCI (Physical Cell Identity, physical cell identity).

As one sub-embodiment of this embodiment, the identifier of the sender includes a PLMN (Public Land Mobile Network, public land mobile network) ID.

As one sub-embodiment of this embodiment, the identifier of the sender is a non-negative integer.

As one sub-embodiment of this embodiment, the identifier of the sender is a positive integer.

As one embodiment, a time domain position of the first time window is used for determining the target occasion subset from the candidate occasion set.

As one sub-embodiment of this embodiment, the time domain position of the first time window includes a slot number of a first slot in a time domain included in the first time window.

As one sub-embodiment of this embodiment, the time domain position of the first time window includes a subframe number of a first subframe in a time domain included in the first time window.

As one sub-embodiment of this embodiment, the time domain position of the first time window includes a frame number of a first radio frame in a time domain included in the first time window.

As one sub-embodiment of this embodiment, the time domain position of the first time window includes a system frame number of a first system frame in a time domain included in the first time window.

As one embodiment, an identifier of a sender of the first information block and the time domain position of the first time window are used together to determine the target occasion subset from the candidate occasion set.

As one embodiment, the first wake-up signal is used in an RRC (Radio Resource Control, radio resource control) idle (idle) state or an RRC inactive (Inactive) state.

As one embodiment, the first wake-up signal may be used in an RRC (Radio Resource Control, radio resource control) idle (idle) state, an RRC inactive (Inactive) state, and an RRC connected (connected) state.

**Embodiment 2**

Embodiment 2 illustrates a schematic diagram of a network architecture, as shown in FIG. 2.

FIG. 2 illustrates a diagram of a network architecture 200 of a 5G NR, LTE (Long-Term Evolution, long-term evolution), and LTE-A (Long-Term Evolution Advanced, long-term evolution advanced) system. The 5G NR or LTE network architecture 200 may be referred to as an EPS (Evolved Packet System, evolved packet system) 200 or another suitable term. The EPS 200 may include a UE (User Equipment, user equipment) 201, an NR-RAN (next generation radio access network) 202, an EPC (Evolved Packet Core, evolved packet core)/5G-CN (5G-Core Network, 5G-core network) 210, an HSS (Home Subscriber Server, home subscriber server) 220, and an Internet service 230. The EPS may be interconnected with another access network, but these entities/interfaces are not shown for simplicity. As shown in the figure, the EPS provides a packet-switching service. However, a person skilled in the art may readily appreciate that the various concepts presented throughout the present application may be extended to a network providing a circuit-switching service or another cellular network. The NR-RAN includes an NR NodeB (gNB) 203 and another gNB 204. The gNB 203 provides user and control plane protocol termination toward the UE 201. The gNB 203 may be connected to the another gNB 204 via an Xn interface (for example, backhaul). The gNB 203 may also be referred to as a base station, a base transceiver station, a radio base station, a radio transceiver, a transceiver function, a basic service set (BSS), an extended service set (ESS), a TRP (transmit receive node), or another suitable term. The gNB 203 provides an access point to the EPC/5G-CN 210 for the UE 201. An example of the UE 201 includes a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, a drone, aircraft, a narrowband Internet of Things device, a machine type communication device, a land vehicle, an automobile, a wearable device, or any other similarly functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The gNB 203 is connected to the EPC/5G-CN 210 via an S1/NG interface. The EPC/5G-CN 210 includes an MME (Mobility Management Entity, mobility management entity) AMF (Authentication Management Field, authentication management field)/UPF (User Plane Function, user plane function) 211, another MME/AMF/UPF 214, an S-GW (Service Gateway, service gateway) 212, and a P-GW (Packet Data Network Gateway, packet data network gateway) 213. The MME/AMF/UPF 211 is a control node that processes signaling between the UE 201 and the EPC/5G-CN 210. Generally, the MME/AMF/UPF 211 provides bearer and connection management. All user IP (Internet Protocol, Internet protocol) packets are transmitted through the S-GW 212, and the S-GW 212 is connected to the P-GW 213. The P-GW 213 provides UE IP address allocation and another function. The P-GW 213 is connected to the Internet service 230. The Internet service 230 includes an operator-corresponding Internet protocol service, and may specifically include the Internet, the Intranet, an IMS (IP Multimedia Subsystem, IP multimedia subsystem), and a packet switching streaming service.

As one embodiment, the UE 201 corresponds to the first node in the present application.

As one embodiment, the UE 201 supports Energy Saving on a terminal side.

As one embodiment, the UE 201 supports receiving of an LP WUS.

As one embodiment, the UE 201 supports layer-3 measurement through the LP WUS.

As one embodiment, the NR NodeB corresponds to the second node in the present application.

As one embodiment, the NR NodeB supports Energy Saving on a terminal side.

As one embodiment, the NR NodeB supports sending of an LP WUS.

As one embodiment, the NR NodeB supports reporting of layer-3 measurement through the LP WUS.

As one embodiment, the NR NodeB is a base station.

As one embodiment, the NR NodeB is a cell.

As one embodiment, the NR NodeB includes a plurality of cells.

As one embodiment, the first node in the present application corresponds to the UE 201, and the second node in the present application corresponds to the NR NodeB.

**Embodiment 3**

Embodiment 3 shows a schematic diagram of an embodiment of a wireless protocol architecture of a user plane and a control plane according to the present application, as shown in FIG. 3. FIG. 3 is a schematic diagram illustrating an embodiment of radio protocol architectures of a user plane 350 and a control plane 300. FIG. 3 shows a radio protocol architecture of the control plane 300 between a first communication node device (a UE, a gNB, or an RSU in V2X) and a second communication node device (a gNB, a UE, or an RSU in V2X) with three layers: a layer 1, a layer 2, and a layer 3. The layer 1 (L1 layer) is the lowest layer and implements various PHY (physical layer) signal processing functions. The L1 layer is referred to as a PHY 301 in this specification. The layer 2 (L2 layer) 305 is above the PHY 301 and is responsible for a link that is between the first communication node device and the second communication node device and that passes through the PHY 301. The L2 layer 305 includes a MAC (Medium Access Control, media access control) sublayer 302, an RLC (Radio Link Control, radio link control protocol) sublayer 303, and a PDCP (Packet Data Convergence Protocol, packet data convergence protocol) sublayer 304. These sublayers are terminated at the second communication node device. The PDCP sublayer 304 provides multiplexing between different radio bearers and logical channels. The PDCP sublayer 304 further provides security by encrypting a data packet, and the PDCP sublayer 304 further provides inter-zone mobility support for the first communication node device to the second communication node device. The RLC sublayer 303 provides segmentation and reassembly of an upper layer data packet, retransmission of a lost data packet, and reordering of data packets to compensate for out-of-order receiving due to an HARQ. The MAC sublayer 302 provides multiplexing between logical and transmit channels. The MAC sublayer 302 is further responsible for allocating various radio resources (for example, resource blocks) in one cell between the first communication node devices. The MAC sublayer 302 is further responsible for an HARQ operation. An RRC (Radio Resource Control, radio resource control) sublayer 306 in the layer 3 (L3 layer) in the control plane 300 is responsible for obtaining a radio resource (namely, a radio bearer) and configuring a lower layer by using RRC signaling between the second communication node device and the first communication node device. A radio protocol architecture of the user plane 350 includes a layer 1 (L1 layer) and a layer 2 (L2 layer). The radio protocol architecture for the first communication node device and the second communication node device in the user plane 350 is substantially the same as the corresponding layers and sublayers in the control plane 300 in terms of a physical layer 351, a PDCP sublayer 354 in the L2 layer 355, an RLC sublayer 353 in the L2 layer 355, and a MAC sublayer 352 in the L2 layer 355. However, the PDCP sublayer 354 further provides header compression for an upper layer data packet to reduce radio transmission overhead. The L2 layer 355 in the user plane 350 further includes an SDAP (Service Data Adaptation Protocol, service data adaptation protocol) sublayer 356, and the SDAP sublayer 356 is responsible for mapping between a QoS flow and a data radio bearer (DRB, Data Radio Bearer) to support diversity of services. Although not shown in the figure, the first communication node device may include several upper layers above the L2 layer 355, including a network layer (for example, an IP layer) terminated at a P-GW on a network side and an application layer terminated at another end (for example, a remote UE and a server) of a connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the PDCP 304 of the second communication node device is used to generate scheduling of the first communication node device.

As one embodiment, the PDCP 354 of the second communication node device is used to generate scheduling of the first communication node device.

As one embodiment, the first information block is generated in the RRC 306.

As one embodiment, the first information block is generated in the MAC 302 or the MAC 352.

As one embodiment, the wake-up signal in the target wake-up signal set is generated in the MAC 302 or the MAC 352.

As one embodiment, the wake-up signal in the target wake-up signal set is generated in the PHY 301 or the PHY 351.

As one embodiment, the second information block is generated in the RRC 306.

As one embodiment, the second information block is generated in the MAC 302 or the MAC 352.

As one embodiment, the third information block is generated in the RRC 306.

As one embodiment, the third information block is generated above the RRC 306.

As one embodiment, the third information block is generated in a core network.

As one embodiment, the target information is generated in the RRC 306.

As one embodiment, the target information is generated in the MAC 302 or the MAC 352.

As one embodiment, the target information is generated in the PHY 301 or the PHY 351.

As one embodiment, the first node is a terminal.

As one embodiment, the first node is a relay.

As one embodiment, the second node is a relay.

As one embodiment, the second node is a base station.

As one embodiment, the second node is a gNB.

As one embodiment, the second node is a TRP (Transmitter Receiver Point, transmitter receiver point).

As one embodiment, the second node is used to manage a plurality of TRPs.

As one embodiment, the second node is a node used to manage a plurality of cells.

As one embodiment, the third node is a relay.

As one embodiment, the third node is a base station.

As one embodiment, the third node is a gNB.

As one embodiment, the third node is a TRP.

As one embodiment, the third node is used to manage a plurality of TRPs.

As one embodiment, the third node is a node used to manage a plurality of cells.

As one embodiment, the third node is an adjacent node of the second node.

As one embodiment, the third node is an adjacent base station of the second node.

**Embodiment 4**

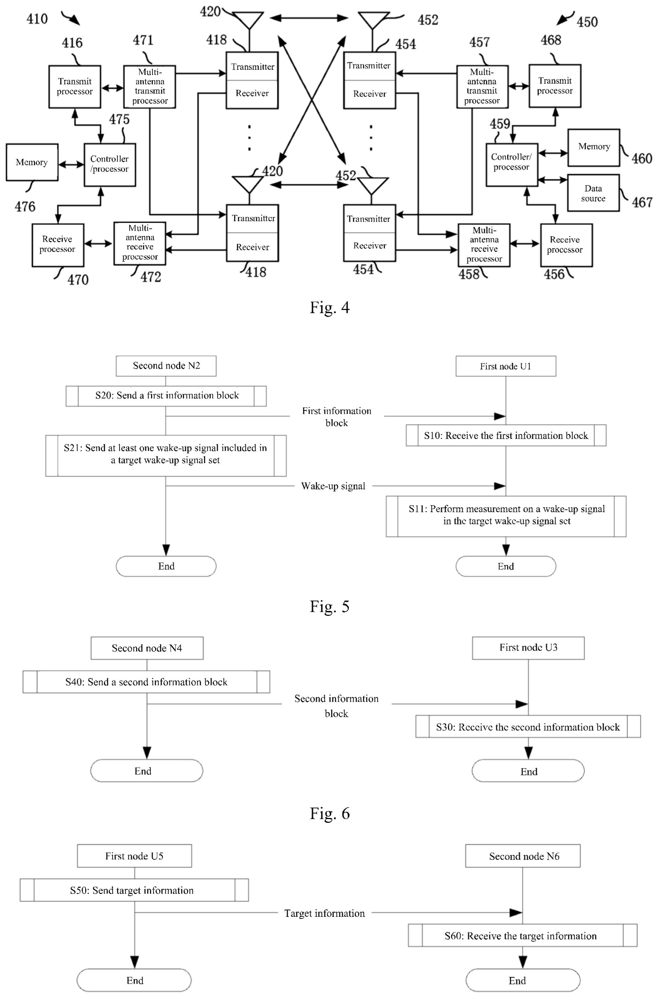

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

In transmission from the second communication device 410 to the first communication device 450, at the second communication device 410, an upper layer data packet from a core network is provided to the controller/processor 475. The controller/processor 475 implements functionality of an L2 layer. In transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is further responsible for retransmission of a lost packet and signaling to the first communication device 450. The transmitting processor 416 and the multi-antenna transmitting processor 471 implement various signal processing functions for an L1 layer (namely, a physical layer). The transmitting processor 416 implements encoding and interleaving to facilitate forward error correction (FEC) at the second communication device 410, and mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs, on a coded and modulated symbol, digital spatial precoding including codebook-based precoding and non-codebook-based precoding and beamforming processing, to generate one or more spatial streams. The transmitting processor 416 then maps each spatial stream to a subcarrier for multiplexing with a reference signal (for example, pilot) in time domain and/or frequency domain, and then generates, through inverse fast Fourier transform (IFFT), a physical channel carrying a time-domain multi-carrier symbol stream. The multi-antenna transmitting processor 471 then performs an operation of sending analog precoding/beamforming on the time domain multi-carrier symbol stream. Each transmitter 418 converts a baseband multi-carrier symbol stream provided by the multi-antenna transmitting processor 471 into a radio frequency stream, and then provides the radio frequency stream to different antennas 420.

In transmission from the second communication device 410 to the first communication device 450, at the first communication device 450, each receiver 454 receives a signal through an antenna 452 corresponding to the receiver 454. Each receiver 454 recovers information modulated onto a radio frequency carrier, and converts a radio frequency stream into a baseband multi-carrier symbol stream to provide the baseband multi-carrier symbol to the receiving processor 456. The receiving processor 456 and the multi-antenna receiving processor 458 implement various signal processing functions of the L1 layer. The multi-antenna receiving processor 458 performs an operation of receiving analog precoding/beamforming on the baseband multi-carrier symbol stream from the receiver 454. The receiving processor 456 converts, through fast Fourier transform (FFT), the baseband multi-carrier symbol stream after the operation of receiving analog precoding/beamforming from time domain to frequency domain. In frequency domain, a physical layer data signal and a reference signal are demultiplexed by the receiving processor 456, where the reference signal is used for channel estimation, and the data signal is recovered to obtain any spatial stream destined for the first communication device 450 after multi-antenna detection in the multi-antenna receiving processor 458. A symbol on each spatial stream is demodulated and recovered in the receiving processor 456, to generate a soft decision. The receiving processor 456 then decodes and deinterleaves the soft decision to recover upper layer data and a control signal that are transmitted by the second communication device 410 on a physical channel. The upper layer data and the control signal are then provided to the controller/processor 459. The controller/processor 459 implements a function of the L2 layer. The controller/processor 459 may be associated with the memory 460 that stores program code and data. The memory 460 may be referred to as a computer-readable medium. In transmission from the second communication device 410 to the second communication device 450, the controller/processor 459 provides demultiplexing between transport and logical channels, packet reassembly, decryption, header decompression, and control signal processing to recover an upper layer data packet from the core network. The upper layer data packet is then provided to all protocol layers above the L2 layer. Various control signals may further be provided to L3 for L3 to process.

In transmission from the first communication device 450 to the second communication device 410, at the first communication device 450, the upper layer data packet is provided to the controller/processor 459 through the data source 467. The data source 467 represents all protocol layers above the L2 layer. Similar to a transmission function at the second communication device 410 described in transmission from the second communication device 410 to the first communication device 450, the controller/processor 459 implements header compression, encryption, packet segmentation and reordering, and multiplexing between logical and transport channels based on radio resource allocation, implementing a function of the L2 layer for a user plane and a control plane. The controller/processor 459 is further responsible for retransmission of a lost packet, and signaling to the second communication device 410. The transmitting processor 468 performs modulation mapping and channel coding processing. The multi-antenna transmitting processor 457 performs digital multi-antenna spatial precoding, including codebook-based precoding and non-codebook-based precoding, and beamforming processing. Then, the transmitting processor 468 modulates a generated spatial stream into a multi-carrier/single-carrier symbol stream. The multi-carrier/single-carrier symbol stream is provided to different antennas 452 through the transmitter 454 after an operation of analog precoding/beamforming in the multi-antenna transmitting processor 457. Each transmitter 454 first converts a baseband symbol stream provided by the multi-antenna transmitting processor 457 into a radio frequency symbol stream, and then provides the radio frequency symbol stream to the antenna 452.

In transmission from the first communication device 450 to the second communication device 410, a function at the second communication device 410 is similar to a receiving function at the first communication device 450 that is described in transmission from the second communication device 410 to the first communication device 450. Each receiver 418 receives a radio frequency signal through an antenna 420 corresponding to the receiver 418, converts the received radio frequency signal into a baseband signal, and then provides the baseband signal to the multi-antenna receiving processor 472 and the receiving processor 470. The receiving processor 470 and the multi-antenna receiving processor 472 jointly implement a function of the L1 layer. The controller/processor 475 implements a function of the L2 layer. The controller/processor 475 may be associated with the memory 476 that stores program code and data. The memory 476 may be referred to as a computer-readable medium. In transmission from the first communication device 450 to the second communication device 410, the controller/processor 475 provides multiplexing between transport and logical channels, packet reassembly, decryption, header decompression, and control signal processing to recover an upper layer data packet from the UE 450. The upper layer data packet from the controller/processor 475 may be provided to the core network.

As one embodiment, the first communication device 450 apparatus includes: at least one processor and at least one memory. The at least one memory includes computer program code, where the at least one memory and the computer program code are configured to be used with the at least one processor. The first communication device 450 apparatus at least first receives a first information block, where the first information block is used for determining a candidate occasion set, and the candidate occasion set includes a plurality of occasions in a first time window; and then performs measurement for a wake-up signal in a target wake-up signal set, where the target wake-up signal set includes at least one wake-up signal; any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of a sender of the first information block or a time domain position of the first time window is used for determining the target occasion subset from the candidate occasion set.

As one embodiment, the first communication device 450 includes a memory storing a computer-readable instruction program, where the computer-readable instruction program generates an action when being executed by at least one processor, and the action includes: first receiving a first information block, the first information block being used for determining a candidate occasion set, and the candidate occasion set including a plurality of occasions in a first time window; and then performs measurement for a wake-up signal in a target wake-up signal set, where the target wake-up signal set includes at least one wake-up signal; any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of a sender of the first information block or a time domain position of the first time window is used for determining the target occasion subset from the candidate occasion set.

As one embodiment, the second communication device 410 apparatus includes: at least one processor and at least one memory, where the at least one memory includes a computer program code; and the at least one memory and the computer program code are configured to be used with the at least one processor. The second communication device 410 apparatus at least first sends a first information block, where the first information block is used for determining a candidate occasion set, and the candidate occasion set includes a plurality of occasions in a first time window; and then sends at least one wake-up signal included in the target wake-up signal set, where a recipient of the first information block performs measurement for the at least one wake-up signal in the target wake-up signal set; any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of the second node or a time domain position of the first time window is used for determining the target occasion subset from the candidate occasion set.

As one embodiment, the second communication device 410 apparatus includes: a memory storing a computer-readable instruction program, where the computer-readable instruction program generates an action when being executed by at least one processor, and the action includes: first sending a first information block, the first information block being used for determining a candidate occasion set, and the candidate occasion set including a plurality of occasions in a first time window; and then sends at least one wake-up signal included in the target wake-up signal set, where a recipient of the first information block performs measurement for the at least one wake-up signal in the target wake-up signal set; any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of the second node or a time domain position of the first time window is used for determining the target occasion subset from the candidate occasion set.

As one embodiment, the first communication device 450 corresponds to the first node in the present application.

As one embodiment, the second communication device 410 corresponds to the second node in the present application.

As one embodiment, the first communication device 450 is a UE.

As one embodiment, the first communication device 450 is a terminal.

As one embodiment, the first communication device 450 is a relay.

As one embodiment, the second communication device 410 is a base station.

As one embodiment, the second communication device 410 is a relay.

As one embodiment, the second communication device 410 is a network device.

As one embodiment, the second communication device 410 is a serving cell.

As one embodiment, the second communication device 410 is a TRP.

As one embodiment, at least the first four of the antenna 452, the receiver 454, the multi-antenna receiving processor 458, the receiving processor 456, and the controller/processor 459 are used to receive the first information block; and at least the first four of the antenna 420, the transmitter 418, the multi-antenna transmitting processor 471, the transmitting processor 416, and the controller/processor 475 are used to send the first information block.

As one embodiment, at least the first four of the antenna 452, the receiver 454, the multi-antenna receiving processor 458, the receiving processor 456, and the controller/processor 459 are used to perform measurement for the wake-up signal in the target wake-up signal set; and at least the first four of the antenna 420, the transmitter 418, the multi-antenna transmitting processor 471, the transmitting processor 416, and the controller/processor 475 are used to send at least one wake-up signal included in the target wake-up signal set.

As one embodiment, at least the first four of the antenna 452, the receiver 454, the multi-antenna receiving processor 458, the receiving processor 456, and the controller/processor 459 are used to receive a second information block; and at least the first four of the antenna 420, the transmitter 418, the multi-antenna transmitting processor 471, the transmitting processor 416, and the controller/processor 475 are used to send the second information block.

As one embodiment, at least the first four of the antenna 452, the receiver 454, the multi-antenna receiving processor 458, the receiving processor 456, and the controller/processor 459 are used to receive a third information block; and at least the first four of the antenna 420, the transmitter 418, the multi-antenna transmitting processor 471, the transmitting processor 416, and the controller/processor 475 are used to send the third information block.

As an embodiment, at least the first four of the antenna 452, the transmitter 454, the multi-antenna transmitting processor 457, the transmitting processor 468, and the controller/processor 459 are used to send target information; and at least the first four of the antenna 420, the receiver 418, the multi-antenna receiving processor 472, the receiving processor 470, and the controller/processor 475 are used to receive the target information.

**Embodiment 5**

Embodiment 5 illustrates a flowchart of a first information block, as shown in FIG. 5. In FIG. 5, a first node U1 communicates with a second node N2 through a wireless link. It is particularly noted that the order in this embodiment does not limit a signal transmission order and an implementation order in the present application. In the absence of conflict, the embodiments, sub-embodiments, and dependent embodiments in Embodiment 5 may be applied to Embodiment 6, Embodiment 7, or Embodiment 8. Conversely, in the absence of conflict, any embodiment, sub-embodiment, and dependent embodiment in Embodiment 6, Embodiment 7, or Embodiment 8 may be applied to Embodiment 5.

For the **first node U1**, the first information block is received in step S10; and in step S11, measurement is performed for a wake-up signal in a target wake-up signal set.

For **the second node N2,** the first information block is sent in step S20; and at least one wake-up signal included in the target wake-up signal set is sent in step S21.

In Embodiment 5, the first information block is used for determining a candidate occasion set, and the candidate occasion set includes a plurality of occasions in a first time window; the target wake-up signal set includes at least one wake-up signal; any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of a sender of the first information block or a time domain position of the first time window is used for determining the target occasion subset from the candidate occasion set.

As one embodiment, step S11 includes performing measurement for at least one wake-up signal in the target wake-up signal set.

As one embodiment, step S11 includes performing measurement for a plurality of wake-up signals in the target wake-up signal set.

As one embodiment, step S11 includes receiving the at least one wake-up signal in the target wake-up signal set.

As one embodiment, step S11 includes receiving the plurality of wake-up signals in the target wake-up signal set.

As one embodiment, step S21 includes sending the plurality of wake-up signals included in the target wake-up signal set.

Typically, the second node is associated with a tracking area code, and the tracking area code is used for determining the target occasion subset from the candidate occasion set.

As one embodiment, the tracking area code corresponds to a TAC (Tracking Area Code, tracking area code).

As one embodiment, the tracking area code is a non-negative integer.

As one embodiment, the tracking area code includes a TAI (Tracking Area Identity, tracking area identity).

As one embodiment, the second node belongs to a TA (Tracking Area, tracking area) corresponding to the tracking area code.

Typically, an identity of the first node is used for determining the first occasion, and the first wake-up signal is used by the first node to determine whether to monitor the PDCCH in the first occasion; and the target wake-up signal set includes a second wake-up signal, the second wake-up signal is associated with a second occasion, and the first occasion is different from the second occasion.

As one embodiment, the second occasion is used by a terminal other than the first node to determine whether to monitor the PDCCH in the second occasion.

As one embodiment, the second occasion is not used by the first node to determine whether to monitor the PDCCH in the first occasion.

As one embodiment, the ID (Identity, identity) of the first node is associated with the first wake-up signal.

As one embodiment, the ID of the first node is related to a time domain resource occupied by the first wake-up signal.

As one sub-embodiment of this embodiment, the ID of the first node is a UE_ID of the first node.

As one sub-embodiment of this embodiment, the ID of the first node is a 5G-S-TMSI of the first node.

As one sub-embodiment of this embodiment, the ID of the first node is a value obtained by taking a 5G-S-TMSI of the first node modulo 4096.

As one sub-embodiment of this embodiment, the ID of the first node is a value obtained by taking a 5G-S-TMSI of the first node modulo 2048.

As one sub-embodiment of this embodiment, the ID of the first node is a value obtained by taking a 5G-S-TMSI of the first node modulo 1024.

As one sub-embodiment of this embodiment, the ID of the first node is an identifier of the first node.

As one sub-embodiment of this embodiment, the ID of the first node is the identity of the first node.

As one embodiment, an ID of the terminal other than the first node is related to a time domain resource occupied by the second wake-up signal.

As one embodiment, meaning of the above-mentioned feature "the second wake-up signal is associated with a second occasion" includes: The time domain resource occupied by the second wake-up signal includes the second occasion.

As one embodiment, meaning of the above-mentioned feature "the second wake-up signal is associated with a second occasion" includes: The time domain resource occupied by the second wake-up signal includes a PO of the terminal other than the first node, and the second occasion belongs to the PO of the terminal other than the first node.

As one embodiment, meaning of the above-mentioned feature "the second wake-up signal is associated with a second occasion" includes: A time interval between the time domain resource occupied by the second wake-up signal and the second occasion is fixed, or is configured through RRC signaling.

As one embodiment, meaning of the above-mentioned feature "the second wake-up signal is associated with a second occasion" includes: The second occasion is used for determining the time domain resource occupied by the second wake-up signal.

As one embodiment, the first occasion and the second occasion occupy different slots respectively.

As one embodiment, the first occasion and the second occasion are respectively associated with different UE IDs.

As one embodiment, the first occasion and the second occasion are respectively associated with different device groups.

As one embodiment, the identity of the first node is a positive integer.

As one embodiment, the identity of the first node is a non-negative integer.

As one embodiment, the first occasion and the second occasion are respectively associated with different POs corresponding to different UEs.

As one embodiment, the identity of the first node is used for determining the first occasion according to the method of Section 7.1 of TS 38.304.

As one embodiment, the identity of the first node is used for determining the first occasion in the following manner:

$$i\_s = \text{floor} \, (UE\_ID/N) \, \text{mod} \, N_S$$

Herein, i_s indicates an index of the first occasion, UE_ID corresponds to the identifier of the first node, N represents a quantity of PFs (Paging Frames, paging frames) in a DRX cycle, and $N_S$ represents a quantity of POs in a PF.

As one embodiment, the identity of the first node is used for determining a time domain resource occupied by the first occasion.

As one embodiment, the identity of the first node is used for determining a slot occupied by the first occasion.

As one embodiment, a position of the time domain resource occupied by the second wake-up signal is related to a position of a time domain resource occupied by the second occasion.

As one sub-embodiment of this embodiment, the position of the time domain resource occupied by the second wake-up signal is used for determining the position of the time domain resource occupied by the second occasion.

As one sub-embodiment of this embodiment, the position of the time domain resource occupied by the second occasion is used for determining the position of the time domain resource occupied by the second wake-up signal.

As one sub-embodiment of this embodiment, a time interval between the position of the time domain resource occupied by the second wake-up signal and the time domain resource occupied by the second occasion is fixed, or is configured through RRC signaling.

Typically, the identity of the first node is used for determining an identifier corresponding to a first device group, and the identifier corresponding to the first device group is used for determining the first wake-up signal; an identifier corresponding to a second device group is used for determining the second wake-up signal; the first device group includes at least one terminal, and the first device group includes the first node; and the second device group includes at least one terminal, and the second device group does not include the first node.

As one embodiment, the first wake-up signal is associated with the first device group, and the first device group includes at least one terminal.

As one sub-embodiment of this embodiment, the first device group includes the first node.

As one embodiment, the second wake-up signal is associated with the second device group, and the second device group includes at least one terminal.

As one sub-embodiment of this embodiment, the second device group does not include the first node.

As one sub-embodiment of this embodiment, the second device group includes the terminal other than the first node.

As one embodiment, the identifier corresponding to the first device group is used for determining the time domain resource occupied by the first wake-up signal.

As one embodiment, the identifier corresponding to the first device group is used for determining a frequency domain resource occupied by the first wake-up signal.

As one embodiment, the identifier corresponding to the second device group is used for determining the time domain resource occupied by the second wake-up signal.

As one embodiment, the identifier corresponding to the second device group is used for determining a frequency domain resource occupied by the second wake-up signal.

**Embodiment 6**

Embodiment 6 illustrates a flowchart of a second information block, as shown in FIG. 6. In FIG. 6, a first node U3 communicates with a second node N4 through a wireless link. It is particularly noted that the order in this embodiment does not limit a signal transmission order and an implementation order in the present application. In the absence of conflict, the embodiments, sub-embodiments, and dependent embodiments in Embodiment 6 may be applied to Embodiment 5, Embodiment 7, or Embodiment 8. Conversely, in the absence of conflict, any embodiment, sub-embodiment, and dependent embodiment in Embodiment 5, Embodiment 7, or Embodiment 8 may be applied to Embodiment 6.

For **the first node U3,** the second information block is received in step S30.

For **the second node N4,** the second information block is sent in step S40.

In Embodiment 6, the second information block is used for determining a first time length, and a configuration parameter set for the target wake-up signal set remains unchanged in the first time length.

As one embodiment, RRC signaling carrying the second information block includes the first information block.

As one embodiment, an RRC message carrying the first information block includes the second information block.

As one embodiment, the second information block is transmitted through RRC signaling.

As one embodiment, a unit of the first time length is milliseconds.

As one embodiment, the first time length includes a quantity of a positive integer greater than 1 of DRX cycles.

As one embodiment, the configuration parameter set for the target wake-up signal set includes only one configuration parameter.

As one embodiment, the configuration parameter set for the target wake-up signal set includes a plurality of configuration parameters.

As one embodiment, the configuration parameter set for the target wake-up signal set includes a time domain resource occupied by a wake-up signal included in the target wake-up signal set.

As one embodiment, the configuration parameter set for the target wake-up signal set includes a frequency domain resource occupied by a wake-up signal included in the target wake-up signal set.

As one embodiment, the configuration parameter set for the target wake-up signal set includes an occurrence periodicity of a wake-up signal included in the target wake-up signal set.

As one embodiment, the first time length is cell-specific.

As one embodiment, the first time length is UE-specific.

Typically, the first information block is used for determining a second time length, and a length of a time interval between the first occasion and the second occasion is related to the second time length.

As one embodiment, the second time length is equal to a DRX cycle.

As one embodiment, the second time length is equal to a positive integer multiple of a DRX cycle.

As one embodiment, the second time length is equal to half of a DRX cycle, or the second time length is equal to 1/4 of a DRX cycle, or the second time length is equal to 1/8 of a DRX cycle.

As one embodiment, the second time length is linearly related to a DRX cycle.

As one embodiment, the DRX cycle associated with the second time length is for the first node.

As one embodiment, the second time length is equal to an SMTC (SS/PBCH Block Measurement Timing Configuration, synchronization signal/physical broadcast channel block measurement timing configuration) length.

As one embodiment, the SMTC length associated with the second time length is for the first node.

As one embodiment, a unit of the second time length is milliseconds.

As one embodiment, a unit of the second time length is a subframe.

As one embodiment, a unit of the second time length is a slot.

As one embodiment, the technical feature "a length of a time interval between the first occasion and the second occasion is related to the first time length" includes: The length of the time interval between the first occasion and the second occasion is not less than half of the first time length.

As one embodiment, the technical feature "a length of a time interval between the first occasion and the second occasion is related to the first time length" includes: The length of the time interval between the first occasion and the second occasion is less than the first time length.

As one embodiment, the technical feature "a length of a time interval between the first occasion and the second occasion is related to the first time length" includes: The length of the time interval between the first occasion and the second occasion is linearly correlated with the first time length.

As one embodiment, the length of the time interval between the first occasion and the second occasion is equal to the second time length, and the second time length is related to the first time length.

As one sub-embodiment of this embodiment, the second time length is equal to a product of the first time length multiplied by a first coefficient.

As a dependent embodiment of this sub-embodiment, the first coefficient is a positive integer greater than 1.

As a dependent embodiment of this sub-embodiment, the first coefficient is a decimal from 0 to 1.

As a dependent embodiment of this sub-embodiment, the first coefficient is one of 1/16, 1/8, 1/4, or 1/2.

As one embodiment, step S30 is located after step S10 and before step S11 in Embodiment 5.

As one embodiment, step S40 is located after step S20 and before step S21 in Embodiment 5.

As one embodiment, step S30 is located before step S10 in Embodiment 5.

As one embodiment, step S40 is located before step S20 in Embodiment 5.

**Embodiment 7**

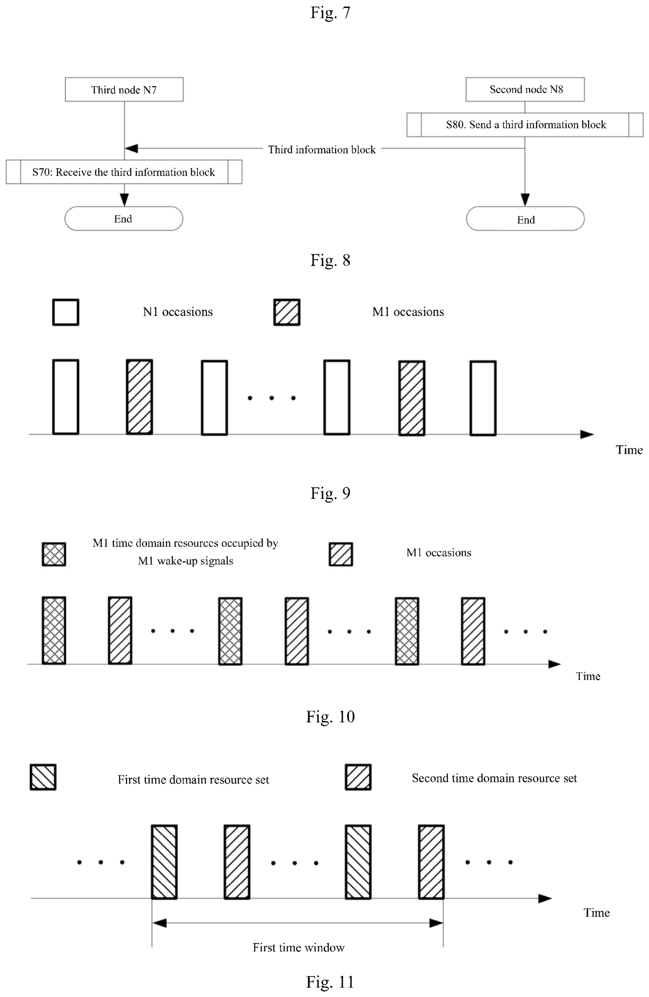

Embodiment 7 illustrates a flowchart of target information, as shown in FIG. 7. In FIG. 7, a first node U5 communicates with a second node N6 through a wireless link. It is particularly noted that the order in this embodiment does not limit a signal transmission order and an implementation order in the present application. In the absence of conflict, the embodiments, sub-embodiments, and dependent embodiments in Embodiment 7 may be applied to Embodiment 5, Embodiment 6, or Embodiment 8. Conversely, in the absence of conflict, any embodiment, sub-embodiment, and dependent embodiment in Embodiment 5, Embodiment 6, or Embodiment 8 may be applied to Embodiment 7.

For **the first node U5,** the target information is sent in step S50.

For **the second node N6,** the target information is received in step S60.

In Embodiment 7, the target information is used for determining whether the first node supports the measurement performed for the wake-up signal in the target wake-up signal set.

As one embodiment, the target information indicates a capability (capability) of the first node device.

As one embodiment, the target information is transmitted through an air interface or a wireless interface.

As one embodiment, the target information is further transmitted via an X2 interface, an Xn interface, or an NG interface.

As one embodiment, the target information is further transmitted between network nodes.

As one embodiment, the target information is received by a network node via an RAN interface and then transmitted to another network node or to a core network.

As one embodiment, the target information is received by a network node via a Uu interface and then transmitted to another network node or to a core network.

As one embodiment, the target information includes a part or all of high-layer signaling or physical layer signaling.

As one embodiment, the target information is earlier than the first information block and the second information block.

As one embodiment, the target information is later than the first information block and the second information block.

As one embodiment, the target information is earlier than the first wake-up signal and the second wake-up signal.

As one embodiment, the target information is later than the first wake-up signal and the second wake-up signal.

As one embodiment, the target information includes a part or all of RRC signaling, or the target information includes a part or all of MAC layer signaling.

As one embodiment, the target information is transmitted through a PUSCH (Physical Uplink Shared Channel, physical uplink shared channel) or a PUCCH (Physical Uplink Control Channel, physical uplink control channel).

As one embodiment, the target information is per UE (per UE), or the target information is per feature set (per feature set), or the target information is per band (per band), or the target information is per band combination (per band combination), or the target information is per band list (per band list), or the target information is per frequency range (per frequency range), or the target information is per duplex mode (per duplex mode).

As one embodiment, the target information is related to a frequency range.

As one embodiment, the target information is related to a duplex mode (TDD or FDD).

As one embodiment, the target information includes a part or all of UE-NR-Capability IE.

As one embodiment, the target information includes a part or all of "UE-RadioPagingInfo".

As one embodiment, the target information includes a part or all of "UERadioPagingInformation".

As one embodiment, the target information includes a part or all of "UE-NR-Capability-v1900".

As one embodiment, the target information includes a part or all of "LPWUS-Parameters-v1900".

As one embodiment, the target information includes a part or all of "lpwus-SubgroupingSupportBandList-r19".

As one embodiment, the target information indicates a UE capability required for paging.

As one embodiment, a quantity of frequency bands indicated by the target information is not greater than 1024.

As one embodiment, the target information further indicates a parameter value of a receiver supported by the first node device.

As one embodiment, the target information further indicates a type of a receiver supported by the first node device.

As one embodiment, the target information further indicates a reception parameter value of a wake-up signal supported by the first node device.

As one embodiment, the target information further indicates at least one configuration parameter value of a wake-up signal supported by the first node device.

As one embodiment, step S50 is located before step S10 in Embodiment 5.

As one embodiment, step S60 is located before step S20 in Embodiment 5.

## Embodiment 8

Embodiment 8 illustrates a flowchart of a third information block, as shown in FIG. 8. In FIG. 8, a third node N7 communicates with a second node N8 through a wired link. It is particularly noted that the order in this embodiment does not limit a signal transmission order and an implementation order in the present application. In the absence of conflict, the embodiments, sub-embodiments, and dependent embodiments in Embodiment 8 may be applied to Embodiment 5, Embodiment 6, or Embodiment 7. Conversely, in the absence of conflict, any embodiment, sub-embodiment, and dependent embodiment in Embodiment 5, Embodiment 6, or Embodiment 7 may be applied to Embodiment 8.

For **the third node N7,** the third information block is received in step S70.

For **the second node N8,** the third information block is sent in step S80.

In Embodiment 7, the third information block is used for determining a configuration parameter set of the target wake-up signal set, the third information block is transmitted via an Xn or S1 interface, a recipient of the third information block includes a third node, and the third node and the first node are not co-located.

As one embodiment, the third information block is transmitted via an Xn interface.

As one embodiment, the third information block is transmitted via an S1 interface.

As one embodiment, the third information block includes the configuration parameter set of the target wake-up signal set.

As one embodiment, the third information block is used for determining the configuration parameter set of the target wake-up signal set.

As one embodiment, the third information block is used for determining a time domain resource occupied by a wake-up signal included in the target wake-up signal set.

As one embodiment, the third information block is used for determining a frequency domain resource occupied by a wake-up signal included in the target wake-up signal set.

As one embodiment, the third information block indicates a time domain resource occupied by a wake-up signal included in the target wake-up signal set.

As one embodiment, the third information block indicates a frequency domain resource occupied by a wake-up signal included in the target wake-up signal set.

As one embodiment, the third node includes a base station.

As one embodiment, the third node is located at a different location from the first node.

As one embodiment, there is no wired connection between the third node and the first node.

As one embodiment, the third information block is transmitted via an Xn interface.

As one embodiment, the third information block is transmitted via an S1 interface.

As one embodiment, a message carrying the third information block includes a part or all of information in RAN Paging.

As one embodiment, the third node and the second node belong to a same TA.

As one embodiment, the third node and the second node correspond to a same TAC.

As one embodiment, the third node and the second node belong to different TAs.

As one embodiment, the third node and the second node correspond to different TACs.

As one embodiment, the second node and the third node are adjacent base stations.

As one embodiment, there is an S1 interface connection between the second node and the third node.

As one embodiment, there is an Xn interface connection between the second node and the third node.

As one embodiment, step S80 is located before step S20 in Embodiment 5.

As one embodiment, step S80 is located after step S20 and before step S21 in Embodiment 5.

## Embodiment 9

Embodiment 9 illustrates a schematic diagram of a target occasion subset, as shown in FIG. 9. In FIG. 9,
the target occasion subset includes M1 occasions, and M1 is a positive integer greater than 1; and the candidate occasion set includes N1 occasions, and any one of the M1 occasions is one of the N1 occasions.

As one embodiment, the occasion in the present application corresponds to a PO.

As one embodiment, the occasion in the present application corresponds to a slot.

As one embodiment, the M1 occasions are periodically distributed in the N1 occasions.

## Embodiment 10

Embodiment 10 illustrates a schematic diagram of a target wake-up signal set and a target occasion subset, as shown in FIG. 10. In FIG. 10, the target occasion subset includes M1 occasions, and M1 is a positive integer greater than 1; and the target wake-up signal set includes M1 wake-up signals, and the M1 wake-up signals correspond one-to-one to the M1 occasions.

As one embodiment, M1 time domain resources occupied by the M1 wake-up signals correspond one-to-one to the M1 occasions.

As one embodiment, the M1 occasions are respectively used for determining M1 time domain resources occupied by the M1 wake-up signals.

As a sub-embodiment of the above two embodiments, the M1 time domain resources are M1 slots.

As one embodiment, at least one of the M1 occasions is a PO of the first node, and at least another occasion of the M1 occasions is a PO of a node other than the first node.

As one embodiment, at least one of the M1 wake-up signals is a wake-up signal for the first node, and at least another wake-up signal of the M1 wake-up signals is a wake-up signal for a node other than the first node.

## Embodiment 11

Embodiment 11 illustrates a schematic diagram of a target wake-up signal set, as shown in FIG. 11. In FIG. 11, the first time window includes a first time domain resource set and a second time domain resource set. When an identifier of the second node is equal to a first integer, a wake-up signal that is included in the target wake-up signal set and that is in the first time window occupies the first time domain resource set; or when an identifier of the second node is equal to a second integer, a wake-up signal that is included in the target wake-up signal set and that is in the first time window occupies the second time domain resource set. The first integer is different from the second integer.

As one embodiment, the first integer and the second integer correspond to two PCIs respectively.

As one embodiment, the first integer and the second integer correspond to two ECGIs (E-UTRAN Cell Global Identifiers, E-UTRAN cell global identifiers) respectively.

As one embodiment, the first integer and the second integer correspond to two TACs respectively.

As one embodiment, the first integer and the second integer correspond to two global eNB identities respectively.

As one embodiment, the first integer and the second integer correspond to two eNB identities respectively.

As one embodiment, the first time domain resource set includes a slot set.

As one embodiment, the second time domain resource set includes a slot set.

## Embodiment 12

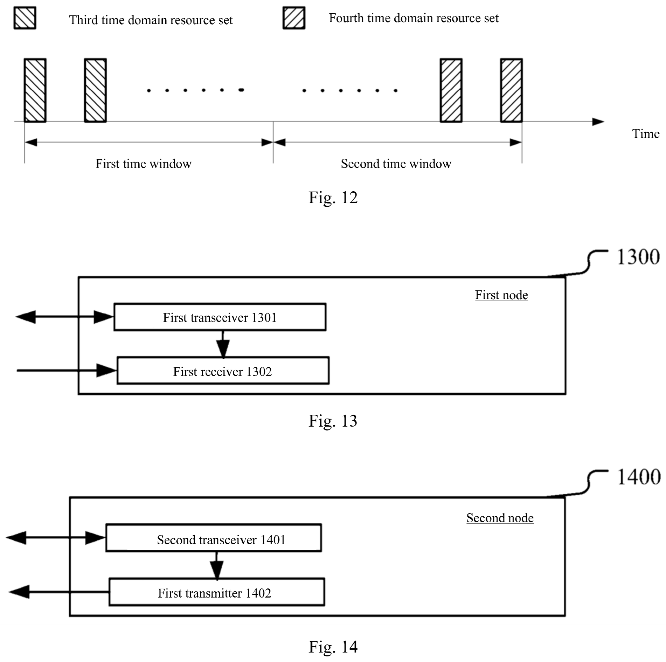

Embodiment 12 illustrates a schematic diagram of another target wake-up signal set, as shown in FIG. 12. In FIG. 12, a wake-up signal that is included in the target wake-up signal set and that is in the first time window occupies the third time domain resource set, and a wake-up signal that is included in the target wake-up signal set and that is in the second time window occupies the fourth time domain resource set; lengths of the first time window and the second time window are the same; and in a time domain resource included in the third time domain resource set, at least one time domain resource has a sequence number in the first time window that is different from a sequence number that is of any time domain resource included in the fourth time domain resource set and that is in the second time window.

As one embodiment, the second time window includes a quantity of a continuous positive integer of slots.

As one embodiment, the second time window is a radio frame.

As one embodiment, the second time window includes a plurality of consecutive radio frames.

As one embodiment, the second time window is a system frame.

As one embodiment, the second time window includes a plurality of consecutive system frames.

As one embodiment, the time domain resource included in the third time domain resource set is a slot.

As one embodiment, the time domain resource included in the fourth time domain resource set is a slot.

As one embodiment, the sequence number in the first time window corresponds to a slot number.

As one embodiment, the sequence number in the first time window corresponds to a subframe number.

As one embodiment, the sequence number in the first time window corresponds to a radio frame number.

As one embodiment, the sequence number in the first time window corresponds to a system frame number.

As one embodiment, the sequence number in the second time window corresponds to a slot number.

As one embodiment, the sequence number in the second time window corresponds to a subframe number.

As one embodiment, the sequence number in the second time window corresponds to a radio frame number.

As one embodiment, the sequence number in the second time window corresponds to a system frame number.

## Embodiment 13

Embodiment 13 illustrates a block diagram of a structure in a first node, as shown in FIG. 13. In FIG. 13, a first node 1300 includes a first transceiver 1301 and a first receiver 1302.

The first transceiver 1301 receives a first information block, where the first information block is used for determining a candidate occasion set, and the candidate occasion set includes a plurality of occasions in a first time window.

The first receiver 1302 performs measurement for a wake-up signal in a target wake-up signal set, where the target wake-up signal set includes at least one wake-up signal.

In Embodiment 13, any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of a sender of the first information block or a time domain position of the first time window is used for determining the target occasion subset from the candidate occasion set.

As one embodiment, the sender of the first information block includes a second node, the second node is associated with a tracking area code, and the tracking area code is used for determining the target occasion subset from the candidate occasion set.

As one embodiment, an identity of the first node is used for determining the first occasion, and the first wake-up signal is used by the first node to determine whether to monitor the PDCCH in the first occasion; and the target wake-up signal set includes a second wake-up signal, the second wake-up signal is associated with a second occasion, and the first occasion is different from the second occasion.

As one embodiment, it is characterized by including:

the first transceiver 1301, receiving a second information block,

where the second information block is used for determining a first time length, and a configuration parameter set for the target wake-up signal set remains unchanged in the first time length.

As one embodiment, the second node sends a third information block, the third information block is used for determining a configuration parameter set of the target wake-up signal set, the third information block is transmitted via an Xn or S1 interface, a recipient of the third information block includes a third node, and the third node and the first node are not co-located.

As one embodiment, the identity of the first node is used for determining an identifier corresponding to a first device group, and the identifier corresponding to the first device group is used for determining the first wake-up signal; an identifier corresponding to a second device group is used for determining the second wake-up signal; the first device group includes at least one terminal, and the first device group includes the first node; and the second device group includes at least one terminal, and the second device group does not include the first node.

As one embodiment, it is characterized by including:

the first transceiver 1301, sending target information, where the target information is used for determining whether the first node supports the measurement performed for the wake-up signal in the target wake-up signal set.

As one embodiment, the first information block is used for determining a second time length, and a length of a time interval between the first occasion and the second occasion is related to the second time length.

As one embodiment, the first transceiver 1301 includes at least the first six of the antenna 452, the transmitter/receiver 454, the multi-antenna transmitting processor 457, the multi-antenna receiving processor 458, the transmitting processor 468, the receiving processor 456, and the controller/processor 459 in Embodiment 4.

As one embodiment, the first receiver 1302 includes at least the first four of the antenna 452, the receiver 454, the multi-antenna receiving processor 458, the receiving processor 456, and the controller/processor 459 in Embodiment 4.

## Embodiment 14

Embodiment 14 illustrates a block diagram of a structure in a second node, as shown in FIG. 14. In FIG. 14, a second node 1400 includes a second transceiver 1401 and a first transmitter 1402.

The second transceiver 1401 sends a first information block, where the first information block is used for determining a candidate occasion set, and the candidate occasion set includes a plurality of occasions in a first time window.

The first transmitter 1402 sends at least one wake-up signal included in a target wake-up signal set, where a recipient of the first information block performs measurement for the at least one wake-up signal in the target wake-up signal set.

In Embodiment 14, any one wake-up signal in the target wake-up signal set is associated with at least one occasion, a target occasion subset includes the occasion associated with the wake-up signal in the target wake-up signal set, and any one occasion included in the target occasion subset belongs to the candidate occasion set; The first occasion is one occasion included in the target occasion subset, the first wake-up signal is a wake-up signal included in the target wake-up signal set and associated with the first occasion, and the first wake-up signal is used for determining whether to monitor a PDCCH in the first occasion; and at least one of an identifier of the second node or a time domain position of the first time window is used for determining the target occasion subset from the candidate occasion set.

As one embodiment, the second node is associated with a tracking area code, and the tracking area code is used for determining the target occasion subset from the candidate occasion set.

As one embodiment, the recipient of the first information block includes a first node, an identity of the first node is used for determining the first occasion, and the first wake-up signal is used by the first node to determine whether to monitor the PDCCH in the first occasion; the target wake-up signal set includes a second wake-up signal, the second wake-up signal is associated with a second occasion, and the first occasion is different from the second occasion.

As one embodiment, the following is included:

the second transceiver 1401, sending a second information block,

where the second information block is used for determining a first time length, and a configuration parameter set for the target wake-up signal set remains unchanged in the first time length.

As one embodiment, the following is included:

the second transceiver 1401, sending a third information block, where the third information block is used for determining a configuration parameter set of the target wake-up signal set,

where the third information block is transmitted via an Xn or S1 interface, a recipient of the third information block includes a third node, and the third node and the first node are not co-located.

As one embodiment, the recipient of the first information block includes a first node, an identity of the first node is used for determining an identifier corresponding to a first device group, and the identifier corresponding to the first device group is used for determining the first wake-up signal;an identifier corresponding to a second device group is used for determining the second wake-up signal; the first device group includes at least one terminal, and the first device group includes the first node; and the second device group includes at least one terminal, and the second device group does not include the first node.

As one embodiment, the following is included:

the second transceiver 1401, receiving target information,
where the target information is used for determining whether the first node supports the measurement performed for the wake-up signal in the target wake-up signal set.

As one embodiment, the first information block is used for determining a second time length, and a length of a time interval between the first occasion and the second occasion is related to the second time length.

As one embodiment, the second transceiver 1401 includes at least the first six of the antenna 420, the receiver/transmitter 418, the multi-antenna receiving processor 472, the receiving processor 470, the multi-antenna transmitting processor 471, the transmitting processor 414, and the controller/processor 475 in Embodiment 4.

As one embodiment, the first transmitter 1402 includes at least the first four of the antenna 420, the transmitter 418, the multi-antenna transmitting processor 471, the transmitting processor 414, and the controller/processor 475 in Embodiment 4.

A person skilled in the art may understand that a part or all of the steps in the foregoing methods may be completed by instructing relevant hardware through a program, and the program may be stored in a computer-readable storage medium, for example, a read-only memory, a hard disk, or an optical disk. Optionally, a part or all of the steps in the foregoing embodiments may alternatively be implemented by using one or more integrated circuits. Accordingly, each module unit in the foregoing embodiments may be implemented in a form of hardware or in a form of software functional modules. The present application is not limited to any specific form of software and hardware combination. The first node in the present application includes but is not limited to a mobile phone, a tablet computer, a notebook, an Internet card, a low-power device, an eMTC device, an NB-IoT device, in-vehicle communication equipment, a transportation tool, a vehicle, an RSU (Road Side Unit, road side unit), aircraft, an airplane, a drone, remote-controlled aircraft, and another wireless communication device. The second node in the present application includes but is not limited to a macrocell base station, a microcell base station, a small cell base station, a home base station, a relay base station, an eNB, a gNB, a transmission and reception node TRP, a GNSS (Global Navigation Satellite System, global navigation satellite system), a relay satellite, a satellite base station, an air base station, an RSU, a drone, test equipment, for example, a transceiver or a signaling tester that simulates some functions of a base station, and another wireless communication device.

A person skilled in the art should understand that the present invention may be implemented in another specified form without departing from its core or basic features. Therefore, embodiments disclosed at present should be considered as illustrative rather than restrictive in any way. The scope of the invention is determined by the appended claims rather than the foregoing description, and all changes within the equivalent meaning and area thereof are considered to be included therein.

## Claims

1. A first node used for wireless communication, comprising:

   a first transceiver for receiving a first information block, the first information block being used for determining a candidate occasion set, and the candidate occasion set comprising occasions within a first time window; and
   a first receiver for performing measurement on a wake-up signal in a target wake-up signal set, the target wake-up signal set comprising at least one wake-up signal,
   wherein any one wake-up signal in the target wake-up signal set is associated with at least one occasion, a target occasion subset comprises the occasion associated with the wake-up signal in the target wake-up signal set, and any one occasion comprised in the target occasion subset belongs to the candidate occasion set; a first occasion is one occasion comprised in the target occasion subset, a first wake-up signal is a wake-up signal comprised in the target wake-up signal set and associated with the first occasion, and the first wake-up signal is used for determining whether to monitor a PDCCH in the first occasion; and at least one of an identifier of a sender of the first information block or a time domain position of the first time window is used for determining the target occasion subset from the candidate occasion set.

2. The first node according to claim 1, wherein the sender of the first information block comprises a second node, the second node is associated with one tracking area code, and the tracking area code is used for determining the target occasion subset from the candidate occasion set.

3. The first node according to claim 1 or 2, wherein an identity of the first node is used for determining the first occasion, and the first wake-up signal is used by the first node for determining whether to monitor the PDCCH in the first occasion; and the target wake-up signal set comprises a second wake-up signal, the second wake-up signal is associated with a second occasion, and the first occasion and the second occasion are different.

4. The first node according to any one of claims 1 to 3, comprising:

the first transceiver for receiving a second information block,
wherein the second information block is used for determining a first time length, and a configuration parameter set for the target wake-up signal set remains unchanged in the first time length.

5. The first node according to any one of claims 1 to 4, wherein the sender of the first information block comprises the second node, the second node sends a third information block, the third information block is used for determining the configuration parameter set of the target wake-up signal set, the third information block is transmitted via an Xn or S1 interface, a recipient of the third information block comprises a third node, and the third node and the first node are not co-located.

6. The first node according to any one of claims 3 to 5, wherein the identity of the first node is used for determining an identifier corresponding to a first device group, and the identifier corresponding to the first device group is used for determining the first wake-up signal; an identifier corresponding to a second device group is used for determining the second wake-up signal; the first device group comprises at least one terminal, and the first device group comprises the first node; and the second device group comprises at least one terminal, and the second device group does not comprise the first node.

7. The first node according to any one of claims 1 to 6, comprising:

the first transceiver for sending target information,
wherein the target information is used for determining that the first node supports the measurement performed for the wake-up signal in the target wake-up signal set.

8. The first node according to any one of claims 3 to 7, wherein the first information block is used for determining a second time length, and a length of a time interval between the first occasion and the second occasion is related to the second time length.

9. A second node used for wireless communication, comprising:

a second transceiver for sending a first information block, the first information block being used for determining a candidate occasion set, and the candidate occasion set comprising a plurality of occasions in a first time window; and
a first transmitter for sending at least one wake-up signal comprised in a target wake-up signal set, a recipient of the first information block performing measurements for the at least one wake-up signal in the target wake-up signal set, wherein any one wake-up signal in the target wake-up signal set is associated with at least one occasion, a target occasion subset comprises the occasion associated with the wake-up signal in the target wake-up signal set, and any one occasion comprised in the target occasion subset belongs to the candidate occasion set; a first occasion is one occasion comprised in the target occasion subset, a first wake-up signal is a wake-up signal comprised in the target wake-up signal set and associated with the first occasion, and the first wake-up signal is used for determining whether to monitor a PDCCH in the first occasion; and at least one of an identifier of the second node or a time domain position of the first time window is used for determining the target occasion subset from the candidate occasion set.

10. A method used in a first node for wireless communication, comprising:

receiving a first information block, the first information block being used for determining a candidate occasion set, and the candidate occasion set comprising a plurality of occasions in a first time window; and
performing measurement for a wake-up signal in a target wake-up signal set, the target wake-up signal set comprising at least one wake-up signal,
wherein any one wake-up signal in the target wake-up signal set is associated with at least one occasion, a target occasion subset comprises the occasion associated with the wake-up signal in the target wake-up signal set, and any one occasion comprised in the target occasion subset belongs to the candidate occasion set; a first occasion is one occasion comprised in the target occasion subset, a first wake-up signal is a wake-up signal comprised in the target wake-up signal set and associated with the first occasion, and the first wake-up signal is used for

43     **EP 4 651 543 A1**     44

determining whether to monitor a PDCCH in the first occasion; and at least one of an identifier of a sender of the first information block or a time domain position of the first time window is used for determining the target occasion subset from the candidate occasion set.

11. A method used in a second node for wireless communication, comprising:

sending a first information block, the first information block being used for determining a candidate occasion set, and the candidate occasion set comprising a plurality of occasions in the first time window; and
sending at least one wake-up signal comprised in a target wake-up signal set, a recipient of the first information block performing measurements for the at least one wake-up signal comprised in the target wake-up signal set,
wherein any one wake-up signal in the target wake-up signal set is associated with at least one occasion, a target occasion subset comprises the occasion associated with the wake-up signal in the target wake-up signal set, and any one occasion comprised in the target occasion subset belongs to the candidate occasion set; a first occasion is one occasion comprised in the target occasion subset, a first wake-up signal is a wake-up signal comprised in the target wake-up signal set and associated with the first occasion, and the first wake-up signal is used for determining whether to monitor a PDCCH in the first occasion; and at least one of an identifier of the second node or a time domain position of the first time window is used for determining the target occasion subset from the candidate occasion set.

$100 \sim \blacktriangleright$

First node

Step 101: Receive a first information block, the first information block being used to determine a set of candidate occasions, and the set of candidate occasions including a plurality of occasions in a first time window

Step 102: Perform measurement on a wake-up signal in a target wake-up signal set, the target wake-up signal set including at least one wake-up signal

End

Fig. 1

EPS 200

NR-RAN
202

HSS — 220

UE — 201

NR NodeB — 203

Another NR NodeB — 204

MME/AMF/UPF — 211

Another MME/AMF/UPF — 214

S-GW — 212

P-GW — 213

5G-CN/EPC
210

Internet service — 230

Fig. 2

Control plane
300

L3 — RRC — 306

L2 — PDCP — 304

305 —

RLC — 303

MAC — 302

L1 — PHY — 301

User plane
350

SDAP — 356

355 — L2 — PDCP — 354

RLC — 353

MAC — 352

L1 — PHY — 351

Fig. 3

Fig. 4

Fig. 5

Fig. 6

Fig. 7

```
┌─────────────────────────┐                                    ┌─────────────────────────┐
│      Third node N7       │                                    │      Second node N8      │
└─────────────────────────┘                                    └─────────────────────────┘
             │                                                  ┌─────────────────────────┐
             │                                                  │ S80. Send a third       │
             │                                                  │ information block        │
             │                                                  └─────────────────────────┘
             ▼◄──────────── Third information block ─────────────           │
┌─────────────────────────┐                                                 │
│ S70: Receive the third  │                                                 │
│ information block        │                                                 │
└─────────────────────────┘                                                 │
             │                                                               ▼
             ▼                                                    ┌─────────────────┐
   ┌─────────────────┐                                            │       End       │
   │       End       │                                            └─────────────────┘
   └─────────────────┘
```

Fig. 8

N1 occasions          M1 occasions

Time

Fig. 9

M1 time domain resources occupied by M1 wake-up signals          M1 occasions

Time

Fig. 10

First time domain resource set          Second time domain resource set

Time

First time window

Fig. 11

Third time domain resource set

Fourth time domain resource set

Time

First time window

Second time window

Fig. 12

1300

First node

First transceiver 1301

First receiver 1302

Fig. 13

1400

Second node

Second transceiver 1401

First transmitter 1402

Fig. 14

## INTERNATIONAL SEARCH REPORT

<table>
<tr><td colspan="2"></td><td>International application No.<br><br>**PCT/CN2024/071273**</td></tr>
</table>

| A. | CLASSIFICATION OF SUBJECT MATTER |
|---|---|

H04W 24/02(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, CJFD, 3GPP: 测量, 监听, 监测, 检测, 唤醒, 对应, 关联, 时机, 寻呼, 窗口, 层3, measure, listen, monitor, detect, wake up, WUS, correspond+, associat+, occasion, paging, PO, window, PTW, layer 3, L3

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | WO 2023193507 A1 (ZTE CORP.) 12 October 2023 (2023-10-12)<br>description, page 2, last paragraph to 6th-to-last paragraph, and figures 1-12 | 1-11 |
| X | US 2022338121 A1 (HUAWEI TECHNOLOGIES CO., LTD.) 20 October 2022 (2022-10-20)<br>description, paragraphs [0126]-[0199], and figures 1-12 | 1-11 |
| X | WO 2019086674 A1 (SONY MOBILE COMMUNICATIONS INC. et al.) 09 May 2019<br>(2019-05-09)<br>description, page 23, line 1 to page 32, line 31, and figures 14-24 | 1-11 |
| A | CN 111328461 A (QUALCOMM INC.) 23 June 2020 (2020-06-23)<br>entire document | 1-11 |
| A | US 2022287071 A1 (LG ELECTRONICS INC.) 08 September 2022 (2022-09-08)<br>entire document | 1-11 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 April 2024** | **10 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2024/071273** |

| Patent document cited in search report | | | Publication date (day/month/year) | Patent family member(s) | | | Publication date (day/month/year) |
|---|---|---|---|---|---|---|---|
| WO | 2023193507 | A1 | 12 October 2023 | CN | 115915393 | A | 04 April 2023 |
| US | 2022338121 | A1 | 20 October 2022 | WO | 2021138917 | A1 | 15 July 2021 |
| | | | | EP | 4072204 | A1 | 12 October 2022 |
| | | | | CN | 114175747 | A | 11 March 2022 |
| WO | 2019086674 | A1 | 09 May 2019 | EP | 3704901 | A1 | 09 September 2020 |
| | | | | JP | 2021502029 | A | 21 January 2021 |
| | | | | US | 2020367194 | A1 | 19 November 2020 |
| CN | 111328461 | A | 23 June 2020 | SG | 11202003239 | TA | 28 May 2020 |
| | | | | JP | 2021502772 | A | 28 January 2021 |
| | | | | JP | 2021502776 | A | 28 January 2021 |
| | | | | SG | 11202003205 | TA | 28 May 2020 |
| | | | | KR | 20200083483 | A | 08 July 2020 |
| | | | | EP | 3711370 | A1 | 23 September 2020 |
| | | | | BR | 112020009261 | A2 | 10 November 2020 |
| | | | | TW | 201924406 | A | 16 June 2019 |
| | | | | JP | 2021192527 | A | 16 December 2021 |
| | | | | TW | 201924377 | A | 16 June 2019 |
| | | | | WO | 2019094480 | A1 | 16 May 2019 |
| | | | | WO | 2019094494 | A1 | 16 May 2019 |
| | | | | KR | 20200083482 | A | 08 July 2020 |
| | | | | US | 2019150114 | A1 | 16 May 2019 |
| | | | | BR | 112020009264 | A2 | 20 October 2020 |
| | | | | US | 2019150094 | A1 | 16 May 2019 |
| US | 2022287071 | A1 | 08 September 2022 | WO | 2021029725 | A1 | 18 February 2021 |
| | | | | KR | 20220047768 | A | 19 April 2022 |

Form PCT/ISA/210 (patent family annex) (July 2022)